# EUROPEAN PATENT APPLICATION

(11) **EP 4 524 634 A1**
(43) Date of publication of application: **19.03.2025**
(21) Application number: 24167046.2
(22) Date of filing: 27.03.2024
(51) Int. Cl.: G02B 6/44

(54) **COMPACT ARMORED INTERMITTENTLY BONDED RIBBON CABLES**

(30) Priority: 15.09.2023 IN 202311062298
(71) Applicant: HFCL Limited, New Delhi 110048 (IN)
(72) Inventor: Weimann, Peter, Georgia, 30306 (US); Agrawal, Pramod, 501359 Telangana (IN); Prakash Das, Jyoti, 501359 Telangana (IN)
(74) Representative: Office Freylinger

(57) **Abstract**

The present invention provides an armored cable (100, 200) comprising a plurality of optical fibers (106) arranged in a plurality of IBRs, which can be bundled or unbundled. The IBRs are enclosed by a first layer of thin polymer sheath (102, 202). The first layer (102, 202) is further enclosed in a second layer (108, 208), which is placed within an armor layer (110, 210). An outer cable jacket (112, 212) surrounds the armor layer (110, 210), which optionally comprises at least a reinforcing member (114, 214).

## Description

### FIELD OF THE INVENTION

The present invention relates to the domain of optical fiber cables. More particularly, the present invention provides compact armored cable comprising a plurality of optical fibers.

### BACKGROUND OF THE INVENTION

High fiber count intermittently bonded ribbon (IBR) cables are commonly used in hyperscale data center interconnect applications where they are typically installed in underground conduits, which are large enough to resist rodent attack. Cables or conduits with an outer diameter greater than about 20 mm are typically not big enough for rodents to bite or claw their way into. In addition, accidental dig-ups are unlikely to occur in such hyperscale data centers.

However, IBR cables are also becoming common in traditional outside plant (OSP) telecom applications where installation takes place in public rights-of-way. Such cables may be routed in underground conduits, be directly buried in the ground, or installed aerially on poles by lashing to a support wire or existing copper cables. In aerial and direct buried installations, the cables are vulnerable to rodent attack. In conduit installations in public rights-of-way, the cables are vulnerable to dig-ups. Service providers often deploy cables protected by longitudinally applied corrugated steel armoring to prevent rodent attack/damage or dig-up damage.

Currently available armored IBR cables are relatively large and/or difficult to manufacture. Therefore, there is an unmet need for compact and cost-effective armored cables.

### SUMMARY OF THE INVENTION

This summary is not intended to identify essential features of the claimed subject matter nor is it intended for use in determining or limiting the scope of the claimed subject matter.

In an aspect of the present invention, there is provided an optical fiber cable comprising: (a) a first layer of thin polymer sheath enclosing a plurality of intermittently bonded ribbons, each intermittently bonded ribbons comprising a plurality of optical fibers; (b) a second layer surrounding the first layer; (c) an armor layer surrounding the second layer; and (d) an outer cable jacket.

In an aspect of the present invention, the first layer of thin polymer sheath has thickness in the range of 0.1mm to 0.5mm.

In an aspect of the present invention, the first layer comprises at least one notch to facilitate easy tearing of the first layer with a user's finger.

In yet another aspect of the present invention, the first layer of thin polymer sheath at notched region has a minimum thickness in the range of 0.05mm to 0.15mm.

In yet another aspect of the present invention, the plurality of intermittently bonded ribbons are bundled together using one or more bundling members to obtain one or more bundles of intermittently bonded ribbons, wherein said bundling member is selected from the group consisting of yarn, tape, and the like.

In still another aspect of the present invention, at least one bundling member is uniquely colored.

In still another aspect of the present invention, the plurality of intermittently bonded ribbons are unbundled.

In still another aspect of the present invention, the second layer is restrictively wrapped around the first layer.

In an aspect of the present invention, the second layer is longitudinally placed along the length of the first layer.

In an aspect of the present invention, the second layer material is selected from the group consisting of polymeric tape, water swellable tape, polyester tape, aramid yarn, IGFR yarns, polymeric yarns, superabsorbent material, and combinations thereof.

In another aspect of the present invention, the second layer has a thickness in range 0.1-1 mm.

In another aspect of the present invention, the first layer comprises at least a water swellable material, the water swellable material is selected from the group consisting of water swellable yarns, water swellable powder, and combinations thereof.

In an aspect of the present invention, the armor layer is selected from the group consisting of corrugated steel tape, aluminum tape, spiral interlocking steel, and spiral interlocking aluminum.

In another aspect of the present invention, the cable comprises at least a strength member completely or partially embedded in the outer cable jacket.

In another aspect of the present invention, the cable comprises at least a strength member located within the first layer.

In yet another aspect of the present invention, the strength member is coated with any one or more of non-abrasive material, adhesive material, water absorbent material, and combinations thereof.

In still another aspect of the present invention, the strength member is selected from the group consisting of steel wires, aramid reinforced plastic (ARP), fiber reinforced plastic (FRP), glass reinforced plastic (GRP), aramid yarn, and impregnated glass fiber reinforcement (IGFR).

The foregoing illustrative summary and other embodiments and examples of the invention are further explained in the present disclosure and its accompanying drawings.

### BRIEF DESCRIPTION OF THE ACCOMPANYING DRAWINGS

The following drawings form part of the present specification and are included to further illustrate aspects of the present invention. The invention may be better understood by reference to the drawings in combination with the detailed description of the specific embodiments presented herein.
Figure 1 depicts the cross-section of a cable comprising a plurality of bundled IBRs, in accordance with an embodiment of the present invention.
Figure 2 depicts the cross-section of a cable comprising a plurality of unbundled IBRs, in accordance with an embodiment of the present invention.
Figure 3 depicts the cross-section of the first layer of thin polymer sheath having one or more notches, in accordance with an embodiment of the present invention.

### DETAILED DESCRIPTION OF THE INVENTION

For convenience, before further description of the present invention, certain terms employed in the specification, examples are collected here. These definitions should be read in light of the remainder of the disclosure and understood as by a person skilled in the art. Unless otherwise defined, all technical and scientific terms used herein have the same meaning as commonly understood by a person of ordinary skill in the art. The terms used throughout the specification are defined as follows, unless otherwise limited in specific instances.

The present inventions ^{©}s not to be limited in scope by the specific embodiments described herein, which are intended for the purposes of exemplification only.

The following description includes the preferred best mode of one embodiment of the present invention. It will be clear from this description of the invention that the invention is not limited to these illustrated embodiments but that the invention also includes a variety of modifications and embodiments thereto. Therefore, the present description should be seen as illustrative and not limiting.

In any embodiment described herein, the open-ended terms""comprising""" "comprises," and the like (which are synonymous with""including""""having," and""characterized b"") may be replaced by the respective partially closed phrases""consisting essentially of"" consists essentially of"" and the like or the respective closed phrases""consisting of""""consists of, and the like. As used herein, the singular forms "a", "an" and "the" designate both the singular and the plural, unless expressly stated to designate the singular only.

In the following detailed description of the invention, reference to an embodiment refers to a particular feature of the invention. Various features described in the present description may not necessarily be part of the same embodiment. Various separate embodiments are not necessarily mutually exclusive of each other. Features described in one or more embodiments may not necessarily be required for implementation of other embodiments.

It is to be appreciated that the various embodiments described in the present description are for the purpose of illustration of the invention and is not to be construed as limiting in nature. A person skilled in the art would appreciate that various features described herein can be implemented independent of each other or in conjunction with each other. The description is not to be construed as limiting in nature for the mere lack of explicit description and all obvious modifications are contemplated to be part and parcel of the description.

The present invention provides an optical fiber cable comprising: (a) a first layer of thin polymer sheath enclosing a plurality of intermittently bonded ribbons, each intermittently bonded ribbons comprising a plurality of optical fibers; (b) a second layer surrounding the first layer; (c) an armor layer surrounding the second layer; and (d) an outer cable jacket.

In an embodiment, the cable further comprises at least a strength member. In a preferred embodiment, the cable comprises 2 strength members. In another preferred embodiment, the 2 strength members are located diametrically opposite to each other. In an embodiment, the strength members are completely embedded in the outer cable jacket. In another embodiment, the strength members are partially embedded in the outer cable jacket. In yet another embodiment, the strength member is located within the first layer. In an embodiment, the strength member is located centrally within the first layer. In an embodiment, the strength member is uncoated. In another embodiment, the strength member is coated with any one of a non-abrasive material, an adhesive, a water absorbent material, and combinations thereof. The strength member can be steel wires, aramid reinforced plastic (ARP), fiber reinforced plastic (FRP), glass reinforced plastic (GRP), aramid yarn, and impregnated glass fiber reinforcement (IGFR). In a preferred embodiment, the strength member is FRP rod. In another preferred embodiment, the strength member is steel wire. In an embodiment, the plurality of strength members are stranded around a central axis. In another embodiment, at least two of the plurality of strength members are stranded around a central axis. In an embodiment, the stranding is helical. In another embodiment, the stranding is S-Z stranding.

In an embodiment, the first layer further comprises at least a water-absorbent material such as water swellable yarns, water swellable powder or a combination thereof.

In an embodiment, one or more optical fibers comprised in at least one or more IBRs is coated with a water absorbent material.

In an embodiment, the first layer is a thin polymer sheath having thickness in the range of 0.1mm to 0.5mm. In a preferred embodiment, the thickness is around 0.4mm. In another preferred embodiment, the thickness is around 0.3mm. In a preferred embodiment, the first layer comprises a plurality of notches to facilitate easy tearing of the sheath with a user's fingers without requiring any tools. In a preferred embodiment, the first layer comprises two notches. The two notches are located diametrically opposite to each other. In an embodiment, the notch is V-shaped. In an embodiment, minimum wall thickness of the first layer at notched region is in the range of 0.05mm to 0.15mm. In an exemplary embodiment, the first layer is made of thermoplastic elastomers (TPEs). A non-limiting example of TPE is Hytrel^{®} HTR8351. In an embodiment, the material for first layer is mineral-filled low-smoke zero-halogen (LSZH) resin. A non-limiting example of LSZH is ECCOH^{™} 6151.

In an embodiment, the plurality of IBRs are placed directly within the first layer without bundling. In another embodiment, the plurality of the IBRs enclosed within the first layer are bundled into one or more bundles. In an embodiment, the plurality of IBRs are bundled into a single bundle. In yet another embodiment, the plurality of IBRs are bundled into a plurality of bundles. A plurality of IBRs are bundled using one or more bundling members selected from the group consisting of yarn, tape, and the like. In a preferred embodiment, the bundling member is polyester yarn or tape. In an embodiment, at least one bundling member used in a bundle is colored. In a preferred embodiment, the plurality of bundled IBRs are bundled with a uniquely colored bundling member for ease in identification of one IBR bundle from other bundles in the cable. In an embodiment, bundling member is coated with at least a superabsorbent material.

In an embodiment, 2-24 IBRs are enclosed within the first layer. In an embodiment at least two of the IBRs are SZ stranded. In another embodiment, plurality of IBRs are longitudinally placed within the first layer. In an embodiment, the first layer encloses a plurality of IBR bundles. In another embodiment, the first layer encloses 2-48 IBRs bundles. In an embodiment, each bundle comprise at least one IBR. In another embodiment, at least one IBR bundle comprise a plurality of IBRs. In an embodiment, the plurality of bundles comprise same number of IBRs. In another embodiment, the plurality of bundles comprise different number of IBRs. In an embodiment, at least 2 of the bundles are helically stranded around each other. In another embodiment, at least 2 of the bundles are S-Z stranded around each other. It is to be understood by a person skilled in the art that the scope of the present invention is not to be limited by the number of IBR bundles, number of IBRs within a bundle or number of optical fibers comprised in an IBR, same will vary based on the application.

An IBR comprises a plurality of optical fibers. In an embodiment, an IBR comprises 4-24 optical fibers. In a preferred embodiment, an IBR comprises 12 optical fibers. In another preferred embodiment, an IBR comprises 6 optical fibers. In yet another preferred embodiment, an IBR comprises 24 optical fibers. It is to be understood by a person skilled in the art that the scope of the present invention is not to be limited by the characteristics of IBR itself or that of the optical fibers comprising the IBR.

The second layer is restrictively wrapped around the first layer. In an embodiment, a substantial coupling is provided between the first layer and the second layer. In another embodiment, a substantial coupling is provided between the second layer and armor layer. Thus, all the layers act as a composite unit during cable installation. In an embodiment, the coupling is provided by relatively high friction between the first layer and second layer as well as between the second layer and armor layer. In an embodiment, the second layer is longitudinally placed along the length of the first layer. In another embodiment, the second layer is helically wrapped around the first layer.

The material of second layer is selected from the group consisting of barrier tape, polyester tape, water-swellable tape, aramid yarn, IGFR yarns, polymeric yarns, hot melts, extruded polymer compounds, and combinations thereof. In an embodiment, the barrier tape is mica tape, which consists of phlogopite mica paper integrated with high quality silicon resin and reinforced with glass cloth. Mica tape exhibits high thermal resistance, good fire resistance, is non-flammable, does not produce toxic gases, and does not contain asbestos.

The composition of the water-swellable tape or yarn is not particularly limited. An exemplary yarn or tape material may include polyester with coating of superabsorbent particles. In an alternate embodiment other materials such as polypropylene can also be used. In another embodiment yarns made of high strength material such as aramid and IGFR, coated with superabsorbent material can be used for providing additional strength and water blocking capability.

In an embodiment, the second layer comprises a single layer. In another embodiment, the second layer comprises a plurality of sub layers. In an embodiment, material of the plurality of sub layers is the same material. In an embodiment, the plurality of layers is at least two different materials. The at least two different materials can be layered in any combination. In an embodiment, the second layer is longitudinally located around the first layer In an embodiment, the second layer material is in helical configuration to restrictively wrap around the plurality of sub units. In another embodiment, one or more sublayer of the second layer is longitudinally placed and one or more sublayer of the second layer is helically wrapped. The thickness of the second layer is in the range of approximately 0.1 to 1.0 mm. In another embodiment, thickness of the second layer is in the range of approximately 0.05 to 0.6 mm. In a preferred embodiment, the thickness of the second layer is less than 0.6mm. In another preferred embodiment, the thickness of the second layer is around 0.4mm.

In an embodiment, the second layer provides mechanical isolation to the first layer from the sharp edge of armor layer. Further, the second layer protects first layer and optical fibers enclosed therein, from any accidental damage during removal of outer jacket and armor layer. Also, the second layer prevents ingression of water or moisture down the length of cable. In another embodiment, the second layer provides thermal isolation between the first layer and the armor layer. In an additional embodiment, the protective layer imparts tensile strength to the cable.

The second layer is enclosed within an armor layer. The armor layer is a metallic armor layer. The armor layer is selected from the group consisting of corrugated steel tape, aluminum tape, spiral interlocking steel, and spiral interlocking aluminum. In a preferred embodiment, the armor layer is corrugated steel tape. In an embodiment, the armor layer is optionally further coated with at least one layer of a polymeric film. In an embodiment, the polymeric film consists of one or more layers of ethylene-acrylic acid (EAA) copolymer. The thickness of the armor layer is in the range of 0.07 - 0.60 mm. In a preferred embodiment, the thickness of the metallic armor layer is around 0.15mm. In a preferred embodiment, the thickness of the polymeric film coating is around 0.05 mm.

An outer cable jacket encloses the armor layer. The jacket is extruded over the armor layer. In an embodiment, the outer cable jacket material is made of polyethylene. In an embodiment, the outer cable jacket material can be a flame-retardant material. In an embodiment, the outer cable jacket material is mineral-filled LSZH resin. In an embodiment, the LSZH resin is LSZH polyolefins. In a non-limiting example of LSZH resin, the material is SPL-ZHFR-1700 manufactured by Shakun Polymers Ltd. In an embodiment, the thickness of the outer cable jacket is in the range of 0.8mm to 4.0mm. In a preferred embodiment, the thickness of the outer cable jacket is 2.2mm.

In an embodiment, the outer cable jacket comprises at least a strength member embedded in the outer cable jacket. In an embodiment, the strength member is completely embedded in the outer cable jacket. In another embodiment, the strength member is partially embedded in the inner wall of the outer cable jacket. In a preferred embodiment, the outer cable jacket comprises 2 strength members arranged longitudinally and diametrically opposite to each other. In another embodiment, the outer cable jacket comprises more than two strength members. In an embodiment, the strength member can be coated with any one of a non-abrasive material, an adhesive, a water absorbent material, and combinations thereof. The strength member can be steel wires, aramid reinforced plastic (ARP), fiber reinforced plastic (FRP), glass reinforced plastic (GRP), aramid yarn, and impregnated glass fiber reinforcement (IGFR).

In an embodiment, the cable further comprises at least a ripcord. In an embodiment, the ripcord is placed below the outer jacket layer.

### EXAMPLES

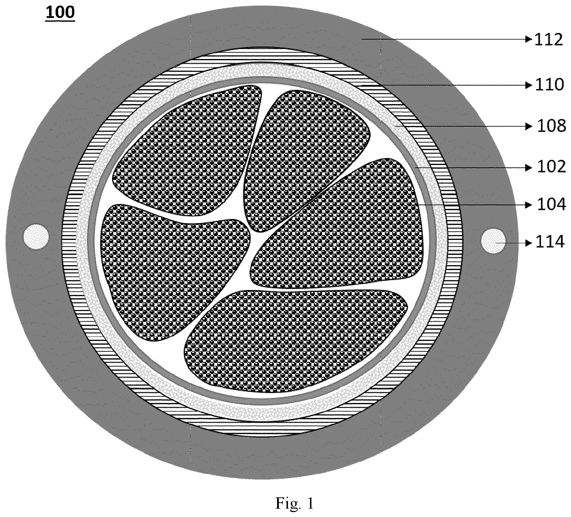

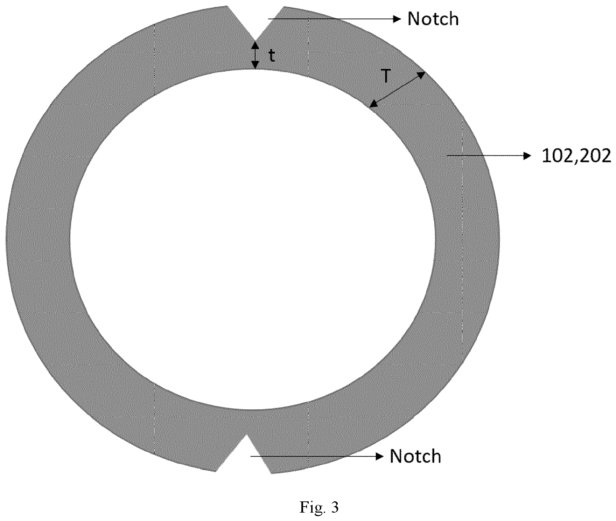

In an exemplary exemplification of the present invention, as seen in Fig. 1, there is provided an optical fiber cable (100) comprising a first layer (102) enclosing a plurality of IBR bundles (104), Each bundle comprises 2 to 24 IBRs and each IBR comprises 12 optical fibers (106) (not shown). The IBRs are bundled by a bundling members, which can be colored yarn. The yarn can be coated with a water absorbent material. As also seen in Fig. 1, the shape of the bundles is not pre-constrained. The bundles can conform to the space available within the first layer to have an irregular shape or near circular shape. The plurality of IBR bundles may be longitudinally placed along each other, or two or more of the IBR bundles may be helically stranded, or S-Z stranded. One or more water swellable yarns (not shown) are placed within the first layer. Additionally, one or more water swellable yarn are placed within at least one IBR bundle (not shown). It is to be noted that the number of yarns or location thereof is not a constraint to the scope of the cable (100) of the present invention. The thickness of the wall of the first layer (102) is around 0.3 mm and comprises 2 V-shaped notches located diametrically opposite each other (refer to Fig. 3). The material of the first layer (102) is thermoplastic elastomers (TPEs). The notches allow for easy access to the IBRs by manual stripping of the first layer (102). The first layer (102) is surrounded by a second layer (108) which is restrictively wrapped around the first layer.

The second layer (108) is enclosed within a metallic armor layer (110) made of corrugated steel. An outer cable jacket (112) is provided to cover the armor layer (110). For additional strengthening of the cable (100), two reinforcing members (114) are embedded within the outer cable jacket (112). The reinforcing member (114) exemplarily are fiber reinforced polymer (FRP) rods, aramid reinforced polymer (ARP) rods, or steel wires. The two FRP rods, ARP rods, or steel wires are located opposite of each other. Ripcords (not shown) can be located between the armor layer (110) and the outer cable jacket (112).

It is to be noted that the number of bundles, number of IBRs in each bundle, and number of optical fibers in each IBR can vary as per requirement and is not a limitation to the scope of the cable described herein

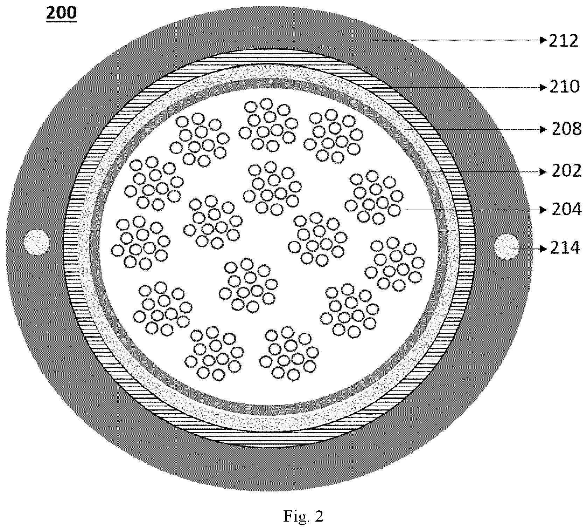

In another exemplary exemplification of the present invention, as shown in Fig. 2, there is provided an optical fiber cable (200) comprising a first layer (202) enclosing a plurality of unbundled IBRs (204). The IBRs can be coated with a water absorbent material. The unbundled IBRs can conform to the space available to have an irregular shape. The unbundled IBRs may be longitudinally placed along each other, two or more of the IBRs may be helically stranded, or S-Z stranded. The space between the IBRs is occupied by a plurality of water swellable yarns (not shown). The maximum thickness (T) of the wall of the first layer (202) is 0.1 mm or 0.15 mm and comprises 2 V-shaped notches located diametrically opposite each other (not shown). The minimum thickness (t) of the wall of the first layer at the notches is _0.05_ mm. The material of the first layer is LSZH polyolefins. The notches allow for easy access to the IBRs by manual stripping of the first layer (202) . The first layer (202) is surrounded by a second layer (208), which is tape. The tape can be polymeric tape preferably coated with superabsorbent material, or the tape can be water swellable tape. The thickness of the second layer is 0.4 mm or 0.6 mm. The second layer (208) is enclosed within a metallic armor layer (210) made of corrugated steel having thickness of 0.15 mm. An outer cable jacket (212) is provided to cover the armor layer (210). The thickness of the outer cable jacket (212) is 2.2 mm. For additional strengthening of the cable (100), two reinforcing members (214) are embedded within the outer cable jacket (212). The reinforcing member (214) exemplarily are fiber reinforced polymer (FRP) rods or steel wires. The two FRP rods or steel wires are located opposite of each other. Ripcords (not shown) can be located between the armor layer (210) and the outer cable jacket (212).

Fig. 3 shows a close-up depiction of the first layer (102, 202) comprising 2 V-shaped notches for ease in manual stripping of the first layer to access the IBRs/optical fibers. The minimum thickness (t) of the first layer is at the location of the notch(es), while the maximum thickness of the first layer is (T).

### ADVANTAGES OF THE PRESENT INVENTION

The cables of the present invention allow for mass fusion splicing, thus reducing cable termination time after installation.

IBR bundles have shape flexibility. The bundles need not be restricted to being circular. The shape of the IBR bundles can conform to the space available within the first layer to provide higher packing density.

The cable of the present invention can pack a higher number of fibers in lesser diameter cables.

The cable of the present invention is smaller in size, resulting in lower material usage and cost per unit length. Advantageously, the diameter of the cable of the present invention is at least 0.6 mm less than that of similar cables known in the art for similar application.

Due to reduced size of the cable of the present invention, the line speed for extrusion of the first layer (thin jacket layer) is higher than those for large hollow central buffer tubes known in the art. Consequently, jacketing speeds for the cables of the present invention are also high.

## Claims

1. An optical fiber cable (100, 200) comprising:
**a.** a first layer of thin polymer sheath (102, 202) enclosing a plurality of intermittently bonded ribbons (IBRs) (104, 204), each IBR comprising a plurality of optical fibers (106);
**b.** a second layer (108, 208) surrounding the first layer;
**c.** an armor layer (110, 210) surrounding the second layer; and
**d.** an outer cable jacket (112, 212).

2. The optical fiber cable (100, 200) as claimed in claim 1, wherein said first layer of thin polymer sheath (102, 202) has thickness in the range of 0.1mm to 0.5mm.

3. The optical fiber cable (100, 200) as claimed in claim 2, wherein said first layer (102, 202) comprises at least one notch to facilitate easy tearing of the first layer (102, 202) with a user's finger.

4. The optical fiber cable (100, 200) as claimed in claim 3, wherein said first layer of thin polymer sheath (102, 202) at notched region has a minimum thickness in the range of 0.05mm to 0.15mm.

5. The optical fiber cable (100) as claimed in claim 1, wherein said plurality of intermittently bonded ribbons (104) are bundled together using one or more bundling members to obtain one or more bundles of intermittently bonded ribbons, wherein said bundling member is selected from the group consisting of yarn, tape, and the like; at least one bundling member preferably being uniquely colored.

6. The optical fiber cable (200) as claimed in claim 1, wherein said plurality of intermittently bonded ribbons (204) are unbundled.

7. The optical fiber cable (100, 200) as claimed in claim 1, wherein the second layer (108, 208) is restrictively wrapped around the first layer (102, 202).

8. The optical fiber cable (100, 200) as claimed in claim 1, wherein the second layer (108, 208) is longitudinally placed along the length of the first layer (102, 202).

9. The optical fiber cable (100, 200) as claimed in claim 1, wherein the second layer (108, 208) material is selected from the group consisting of polymeric tape, water swellable tape, polyester tape, aramid yarn, IGFR yarns, polymeric yarns, superabsorbent material, and combinations thereof.

10. The optical fiber cable (100, 200) as claimed in claim 1, wherein the second layer (108, 208) has a thickness in range 0.1-1mm.

11. The optical fiber cable (100, 200) as claimed in claim 4, wherein said first layer (102, 202) comprises at least a water swellable material, the water swellable material is selected from the group consisting of water swellable yarns, water swellable powder, and combinations thereof.

12. The optical fiber cable (100, 200) as claimed in claim 1, wherein the armor layer (110, 210) is selected from the group consisting of corrugated steel tape, aluminum tape, spiral interlocking steel, and spiral interlocking aluminum.

13. The optical fiber cable (100, 200) as claimed in claim 1, comprising at least a strength member (114, 214) completely or partially embedded in the outer cable jacket (112, 212).

14. The optical fiber cable (100, 200) as claimed in claim 1, comprising at least a strength member (114, 214) located within the first layer (102, 202).

15. The optical fiber cable (100, 200) as claimed in claims 14-15, wherein at least a strength member (114, 214) is coated with any one or more of non-abrasive material, adhesive material, water absorbent material, and combinations thereof; the strength member (114, 214) preferably being selected from the group consisting of steel wires, aramid reinforced plastic (ARP), fiber reinforced plastic (FRP), glass reinforced plastic (GRP), aramid yarn, and impregnated glass fiber reinforcement (IGFR).
